# EUROPÄISCHE PATENTANMELDUNG

(11) **EP 4 299 481 A1**
(43) Veröffentlichungstag der Anmeldung: **03.01.2024**
(21) Anmeldenummer: 23181444.3
(22) Anmeldetag: 26.06.2023
(51) Int. Cl.: B65G 21/20, B65G 47/244, B65G 11/20, B65G 47/256, B65B 7/28, B31B 50/84

(54) **VERFAHREN ZUM FÖRDERN UND ORIENTIEREN VON AUSGIESSELEMENTEN MIT VERSCHLUSS UND FÖRDERVORRICHTUNG**

(30) Priorität: 27.06.2022 AT 504662022
(71) Anmelder: Gassner Verwaltungs-GmbH, 5020 Salzburg (AT)
(72) Erfinder: Gaßner, Wolfgang, 5020 Salzburg (AT)
(74) Vertreter: KLIMENT & HENHAPEL

(57) **Zusammenfassung**

Gezeigt wird ein Verfahren zum Fördern und Orientieren von Ausgießelementen mit Verschluss, wobei die Ausgießelemente jeweils einen kreisringförmigen Flansch umfassen, der an einen die Gießöffnung bildenden kreiszylindrischen Ausgießer anschließt und einen größeren Durchmesser aufweist als der Verschluss, der die Gießöffnung öffenbar verschließt, und wobei der Verschluss in einem Teilbereich seines Umfangs zumindest einen radialen Vorsprung aufweist, der den Flansch in radialer Richtung nicht überragt. Um eine Orientierung der Ausgießelemente ohne bewegliche Teile zu ermöglichen, ist vorgesehen, dass in einem ersten Förderabschnitt (7), der einen Winkel zur Senkrechten aufweist, die Ausgießelemente mit der Umfangsfläche des Flansches auf einer Reibfläche rollend gefördert werden, solange bis der Vorsprung des Verschlusses an einer Seitenführung (12) anschlägt und vorzugsweise durch die Seitenführung (12) von der Reibfläche abgehoben wird und auf der Seitenführung (12) gleitend bei gleichbleibender Orientierung des Vorsprungs des Verschlusses weiter gefördert wird.

## Beschreibung

### GEBIET DER ERFINDUNG

Die vorliegende Erfindung betrifft ein Verfahren zum Fördern und Orientieren von Ausgießelementen mit Verschluss, wobei die Ausgießelemente jeweils einen kreisringförmigen Flansch umfassen, der an einen die Gießöffnung bildenden kreiszylindrischen Ausgießer anschließt und einen größeren Durchmesser aufweist als der Verschluss, der die Gießöffnung öffenbar verschließt, und wobei der Verschluss in einem Teilbereich seines Umfangs zumindest einen radialen Vorsprung aufweist, der den Flansch in radialer Richtung nicht überragt.

Unter Ausgießelementen mit Verschluss werden hier insbesondere solche für Getränkekartons verstanden, z.B. für Getränkekartonverbundpackungen. Die Ausgießelemente mit Verschluss sind in der Regel aus Kunststoff gefertigt und wiederverschließbar ausgeführt. Dies kann beispielsweise durch einen aufklappbaren Deckel als Verschluss oder durch eine aufschraubbare Schraubkappe als Verschluss realisiert sein.

Die Ausgießelemente mit Verschluss werden in Abfüllanlagen zu jener Stelle gefördert, wo die Getränkekartons mit den Ausgießelementen verschlossen werden. Das erfindungsgemäße Verfahren bzw. die erfindungsgemäße Fördervorrichtung kann aber auch beim Transport der Ausgießelemente bei bzw. nach der Herstellung der Ausgießelemente oder vor dem Verpacken der Ausgießelemente nach deren Herstellung zur Anwendung kommen.

Die Fördervorrichtung ist insbesondere dafür geeignet, direkt in eine senkrecht oder schräg nach unten führende Fördereinrichtung integriert zu werden, welche die Ausgießelemente, durch die Schwerkraft angetrieben, am Ende der Förderstrecke in eine Verschließmaschine übergibt.

Es ist auch denkbar, dass die Erfindung nicht nur für die Förderung und Orientierung von Ausgießelementen, sondern auch für andere Kleinteile angewendet werden kann, die einen runden, insbesondere rotationssymmetrischen Flansch und einen Vorsprung aufweisen, der radial nicht über den Flansch hinausragt.

### STAND DER TECHNIK

In Abfüllbetrieben werden Getränkekartons mittels Abfüllmaschinen befüllt, und in derselben Maschine oder in einer eigenen, nachgelagerten Verschlussmaschine mittels Ausgießelementen mit Verschluss verschlossen. Die Ausgießelemente wiederum werden aus einem Vorratsbehälter bzw. einer Aufgabeeinheit mittels eines Entnahmeförderers entnommen und in einer Sortier- und Ausrichteeinheit vororientiert und anschließend der Verschließmaschine zugeführt. Als zubringende Fördervorrichtung werden beispielsweise Schwerkraftförderer, wie eine Rutsche oder Rinne, verwendet.

Die Orientierung ist dann wichtig, wenn das Ausgießelement mit Verschluss nicht rotationssymmetrisch ist, sondern z.B. der Verschluss in einem Teilbereich seines Umfangs einen Vorsprung hat, der in einer bestimmten Orientierung relativ zum Getränkekarton angebracht werden soll. Dieser Vorsprung dient z.B. zum leichteren Öffnen des Verschlusses, indem er eine Angriffsfläche für die Finger des Verbrauchers bietet.

Bisher wurden für die Orientierung der Ausgießelemente, enthaltend einen Verschluss mit Vorsprung, etwa Sternräder, Kameras und Servomotoren, welche die einzelnen Ausgießelemente mit Verschluss gezielt drehen, verwendet. Dies ist technisch aufwändig und begrenzt die Anzahl der pro Zeiteinheit zu orientierenden Ausgießelemente.

Beispielsweise ist aus der US 2,972,184 A eine solche Vorrichtung zum Fördern und Orientieren von Ausgießelementen mit Verschluss bekannt, wobei die Ausgießelemente jeweils einen kreisringförmigen Flansch umfassen, der an einen die Gießöffnung bildenden kreiszylindrischen Ausgießer anschließt und einen größeren Flanschdurchmesser aufweist als der Verschlussdurchmesser. Jeder Verschluss weist dabei einen Vorsprung auf, der den Flansch in radialer Richtung überragt. Die Verschlüsse werden mittels eines Vibrationsförderers und einer rotierenden Trommel in einen senkrechten Förderabschnitt befördert, wobei die Ausgießelemente entweder mit dem Vorsprung nach oben oder nach unten orientiert innerhalb des senkrechten Förderabschnitts übereinander gestapelt werden.

Nachteilig an dieser Ausführung ist, dass die Vorrichtung äußerst komplex aufgebaut ist und bewegliche Teile zur Ausrichtung der Ausgießelemente benötigt. Obwohl die Vorsprünge der Verschlüsse den Flansch der Ausgießelemente in radialer Richtung überragen, ist mit der in US 2,972,184 A gezeigten Vorrichtung eine Orientierung der Vorsprünge der Ausgießelemente in ein und dieselbe Richtung nicht möglich.

### AUFGABE DER ERFINDUNG

Der Erfindung liegt daher die Aufgabe zugrunde, ein Verfahren zum Fördern und Orientieren von Ausgießelementen, enthaltend einen Verschluss mit Vorsprung, sowie eine Fördervorrichtung für solche Ausgießelemente, welche einen Verschluss mit Vorsprung enthalten, zur Verfügung zu stellen, welche eine Orientierung der Ausgießelemente in ein und dieselbe Richtung ohne gezielte Beeinflussung der einzelnen Ausgießelemente, insbesondere ohne gesteuerte bewegliche Teile, ermöglichen.

### DARSTELLUNG DER ERFINDUNG

Die gestellte Aufgabe wird durch ein Verfahren gemäß Anspruch 1 gelöst. Dieses betrifft ein Verfahren zum Fördern und Orientieren von Ausgießelementen mit Verschluss, wobei die Ausgießelemente jeweils einen kreisringförmigen Flansch umfassen, der an einen die Gießöffnung bildenden kreiszylindrischen Ausgießer anschließt und einen größeren Durchmesser aufweist als der Verschluss, der die Gießöffnung öffenbar verschließt, und wobei der Verschluss zumindest in einem Teilbereich seines Umfangs einen radialen Vorsprung aufweist, der den Flansch in radialer Richtung nicht überragt.

Dabei ist vorgesehen, dass in einem ersten Förderabschnitt, der einen Winkel zur Senkrechten aufweist, die Ausgießelemente mit der Umfangsfläche des Flansches auf einer Reibfläche rollend gefördert werden, solange bis der Vorsprung des Verschlusses an einer Seitenführung anschlägt, wodurch eine räumliche Orientierung des Vorsprungs des jeweiligen Ausgießelements jeweils nach unten festgelegt wird, und wobei das jeweilige Ausgießelement sodann vorzugsweise durch die Seitenführung von der Reibfläche abgehoben wird und auf der Seitenführung gleitend bei gleichbleibender räumlicher Orientierung des Vorsprungs des Verschlusses weiter gefördert wird.

Dadurch, dass das Ausgießelement so lange rollt, bis es mit dem Vorsprung an der Seitenführung anschlägt und dann in dieser Position nur mehr weitergleitet und sich nicht mehr dreht, ist die Orientierung des Vorsprungs im Raum festgelegt und ändert sich nicht mehr. Das Ausgießelement kann dann in dieser Position an die Verschließmaschine weitergegeben werden oder an einen weiteren Förderabschnitt, der für die Beibehaltung der räumlichen Orientierung des Vorsprungs sorgt. Das Ausgießelement kann sogar durch die Seitenführung von der Reibfläche abgehoben werden, um ein besseres Gleiten zu ermöglichen, dies ist aber nicht zwingend notwendig.

Es ist im ersten Förderabschnitt auch ein Zwischenzustand denkbar, wo ein Ausgießelement gleichzeitig teils gleitet und teils rollt. Es ist weiters denkbar, dass der Zustand des Ausgießelements mehrmals zwischen Rollen, Gleiten und einem Zwischenzustand wechselt.

Die Ausrichtung des Vorsprungs erfolgt im ersten Förderabschnitt allein durch die Schwerkraft und die mechanische Führung des Ausgießelements, es werden keine bewegten Teile benötigt.

Die Reibfläche kann, um das Rollen des Flansches sicherzustellen und ein Rutschen oder Gleiten des Flansches zu verhindern, als geriffelte Metallfläche oder aus weichem Gummi gefertigt sein.

In einer Ausführungsform des Verfahrens ist vorgesehen, dass der erste Förderabschnitt einen Winkel zwischen 10° und 30°, vorzugsweise zwischen 12° und 18°, besonders bevorzugt von 15°, mit der Senkrechten einschließt.

Der erste Förderabschnitt kann insbesondere in einer senkrechten Ebene angeordnet sein, sodass der Flansch hauptsächlich an der Reibfläche aufliegt. Der erste Förderabschnitt könnte aber auch in einer leicht geneigten Ebene angeordnet sein.

In einer Ausführungsform des Verfahrens ist vorgesehen, dass die Ausgießelemente, in Förderrichtung gesehen, nach dem ersten Förderabschnitt einen zweiten Förderabschnitt gleitend durchlaufen, wo zu beiden Seiten eine Seitenführung die Orientierung des Vorsprungs auf einen Winkelbereich zwischen 5° und 30° begrenzt.

Der zweite Förderabschnitt verläuft vorzugsweise senkrecht. Die im ersten Förderabschnitt ausgerichteten Ausgießelemente werden mit dieser Ausrichtung in den zweiten Förderabschnitt übernommen und bei gleichbleibender räumlicher Orientierung des Vorsprungs durch die Schwerkraft weiter nach unten gefördert.

In einer Ausführungsform des Verfahrens ist vorgesehen, dass die Ausgießelemente, in Förderrichtung gesehen, vor dem ersten Förderabschnitt einen dritten Förderabschnitt gleitend durchlaufen, wo ein kontinuierlich angetriebenes Drehelement mit einer gekrümmten Führungsfläche das Ausgießelement durch Anschlag des Vorsprungs an der Führungsfläche, die sich gegen die Förderrichtung bewegt, in Drehung versetzt.

Da ja im ersten - unter einem Winkel zur Senkrechten geneigten - Förderabschnitt die Ausgießelemente rollen und sich somit in Drehung befinden, kann davor diese Drehung bereits eingeleitet werden. Dies geschieht ohne gezielte Bewegung des Drehelements mit Bezug auf einzelne Ausgießelemente. Das Drehelement dreht sich kontinuierlich mit konstanter Geschwindigkeit.

Der dritte Förderabschnitt verläuft vorzugsweise senkrecht.

Eine mögliche Fördervorrichtung zur Durchführung des erfindungsgemäßen Verfahrens kann so ausgebildet sein,
- dass diese zumindest einen ersten Förderabschnitt aufweist, der in einem Montagezustand der Fördervorrichtung in einem Winkel zur Senkrechten angeordnet ist und zwei einander gegenüberliegende Führungsschienen mit jeweils einer Führungsnut aufweist,
- dass die Führungsnut der ersten Führungsschiene, welche im Montagezustand der Fördervorrichtung unter der zweiten Führungsschiene angeordnet ist, eine Reibfläche aufweist, sodass im Betrieb der Fördervorrichtung eine Umfangsfläche eines Flansches eines Ausgießelementes darauf rollend förderbar ist,
- dass an der ersten Führungsschiene zumindest eine Seitenführung angebracht ist, welche - normal zur Ebene der beiden Führungsschienen gesehen - einen Abstand zur Führungsnut der ersten Führungsschiene aufweist und - parallel zur Ebene der beiden Führungsschienen gemessen - einen geringeren Abstand zur zweiten Führungsschiene aufweist als die Führungsnut der ersten Führungsschiene, um im Betrieb der Fördervorrichtung ein Anschlagen des radialen Vorsprungs eines Verschlusses eines Ausgießelements, das in der Führungsnut der ersten Führungsschiene abrollt, an der Seitenführung mit einer räumlichen Orientierung des Vorsprungs des jeweiligen Ausgießelements jeweils nach unten zu erzwingen, und damit vorzugsweise den Kontakt mit der Reibfläche der Führungsnut aufzuheben.

In einer Ausführungsform der Fördervorrichtung ist vorgesehen, dass der erste Förderabschnitt im Montagezustand der Fördervorrichtung einen Winkel zwischen 10° und 30°, vorzugsweise zwischen 12° und 18°, besonders bevorzugt von 15°, mit der Senkrechten einschließt.

In einer Ausführungsform der Fördervorrichtung ist vorgesehen, dass in Förderrichtung gesehen nach dem erstem Förderabschnitt ein zweiter Förderabschnitt vorgesehen ist, wo zu beiden Seiten eine Seitenführung vorgesehen ist, um die Orientierung des Vorsprungs auf einen Winkelbereich zwischen 5° und 30° zu begrenzen.

Dazu sind z.B. die beiden Seitenführungen auf Höhe des Verschlusses so weit voneinander entfernt, dass der Verschluss zwar in Förderrichtung durchgleiten kann, aber der Vorsprung jeweils links bzw. rechts an einer Seitenführung anschlagen würde, wenn er sich verdrehen würde.

In einer Ausführungsform der Fördervorrichtung ist vorgesehen, dass in Förderrichtung gesehen vor dem erstem Förderabschnitt ein dritter Förderabschnitt mit einem kontinuierlich antreibbaren Drehelement mit einer gekrümmten Führungsfläche vorgesehen ist, um ein im dritten Förderabschnitt entlanggleitendes Ausgießelement durch Anschlag des Vorsprungs an der Führungsfläche, die gegen die Förderrichtung bewegbar ist, in Drehung zu versetzen.

Das Drehelement kann z.B. eine Führungsfläche in Form eines Kreiszylindermantels aufweisen. Das Drehelement selbst dreht sich kontinuierlich und versetzt ein vorbei gleitendes Ausgießelement in Drehung.

Es kann vorgesehen sein, dass die an der ersten (unteren) Führungsschiene des ersten Förderabschnitts angebrachte Seitenführung sofort nach dem Drehelement beginnt. Damit kann verhindert werden, dass ein Ausgießelement durch eine ungünstige Lage seines Vorsprungs im Übergangsbereich zum ersten Förderabschnitt durch Selbsthemmung liegen bleibt.

Es können mehrere erfindungsgemäße Fördervorrichtungen nebeneinander vorgesehen sein, sodass gleichzeitig mehrere Ausgießelemente parallel gefördert und ausgerichtet werden können. Dabei kann im Fall, dass jeweils ein dritter Förderabschnitt mit Drehelement vorgesehen ist, ein gemeinsamer Antrieb für die Drehelemente aller Fördervorrichtungen vorhanden sein, sodass alle Drehelemente synchron laufen.

Die Erfindung umfasst weiters die Verwendung einer erfindungsgemäßen Fördervorrichtung zur Förderung und Orientierung von Ausgießelementen mit Verschluss, wobei die Ausgießelemente jeweils einen kreisringförmigen Flansch umfassen, der an einen die Gießöffnung bildenden kreiszylindrischen Ausgießer anschließt und einen größeren Durchmesser aufweist als der Verschluss, der die Gießöffnung öffenbar verschließt, und wobei der Verschluss in einem Teilbereich seines Umfangs zumindest einen radialen Vorsprung aufweist, der den Flansch in radialer Richtung nicht überragt.

Die Erfindung umfasst weiters ein System aus einer erfindungsgemäßen Fördervorrichtung und zumindest einem Ausgießelement mit Verschluss, wobei das Ausgießelement einen kreisringförmigen Flansch umfasst, der an einen die Gießöffnung bildenden kreiszylindrischen Ausgießer anschließt und einen größeren Durchmesser aufweist als der Verschluss, der die Gießöffnung öffenbar verschließt, und wobei der Verschluss in einem Teilbereich seines Umfangs zumindest einen radialen Vorsprung aufweist, der den Flansch in radialer Richtung nicht überragt, und ist dadurch gekennzeichnet,
- dass im ersten Förderabschnitt der Abstand zwischen der Führungsnut der ersten Führungsschiene und der Führungsnut der zweiten Führungsschiene so bemessen ist, dass der Flansch normal zur Förderrichtung geführt ist, und
- dass im ersten Förderabschnitt die Seitenführung der ersten Führungsschiene - normal zur Ebene der beiden Führungsschienen gesehen - auf Höhe des Verschlusses vorgesehen ist und - parallel zur Ebene der beiden Führungsschienen gemessen - einen Abstand zur zweiten Führungsschiene aufweist, sodass ein Anschlagen des radialen Vorsprungs eines Verschlusses eines Ausgießelements, das in der Führungsnut der ersten Führungsschiene abrollt, an der Seitenführung mit einer räumlichen Orientierung des Vorsprungs des jeweiligen Ausgießelements jeweils nach unten erzwungen wird, und damit vorzugsweise der Kontakt mit der Reibfläche der Führungsnut aufgehoben wird.

Der Abstand zwischen der Reibfläche der Führungsnut der ersten Führungsschiene und der gegenüber liegenden Begrenzungsfläche der Führungsnut der zweiten Führungsschiene kann beispielsweise in allen drei Förderabschnitten um 2-10% größer sein als der Außendurchmesser des Flansches, um ein Gleiten oder Rollen des Ausgießelements sicher zu ermöglichen.

### KURZE BESCHREIBUNG DER FIGUREN

Die Erfindung wird nun anhand von Ausführungsbeispielen näher erläutert. Die Zeichnungen sind beispielhaft und sollen den Erfindungsgedanken zwar darlegen, ihn aber keinesfalls einengen oder gar abschließend wiedergeben. Dabei zeigt:
- Fig. 1: eine schematische Ansicht einer erfindungsgemäßen Fördervorrichtung,
- Fig. 2: einen Querschnitt durch die Fördervorrichtung aus Fig. 1 gemäß Schnittlinie A-A, mit Ausgießelement,
- Fig. 3: einen Querschnitt durch die Fördervorrichtung aus Fig. 1 gemäß Schnittlinie B-B, mit Ausgießelement,
- Fig. 4: einen Querschnitt durch die Fördervorrichtung aus Fig. 1 gemäß Schnittlinie C-C, mit Ausgießelement,
- Fig. 5: eine Draufsicht auf ein Ausgießelement.

### WEGE ZUR AUSFÜHRUNG DER ERFINDUNG

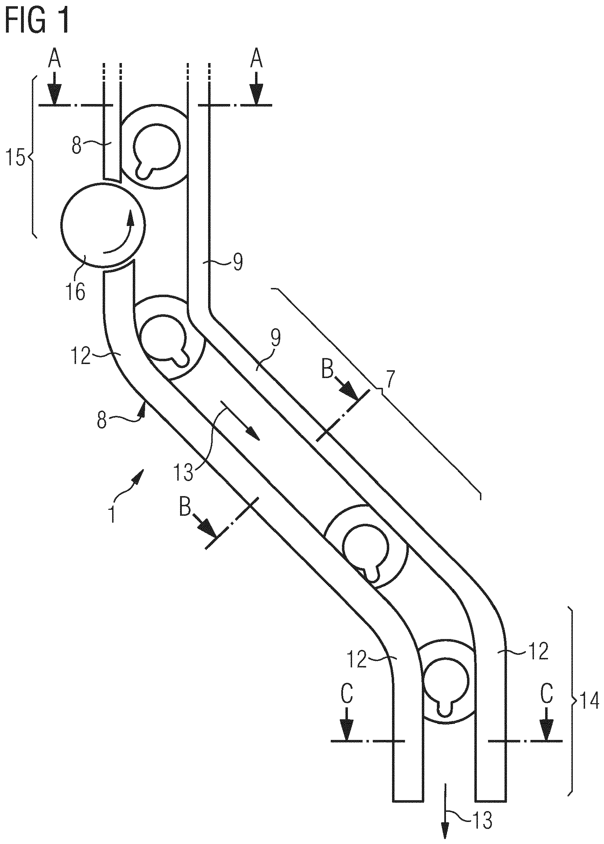

Fig. 1 zeigt eine erfindungsgemäße Fördervorrichtung 1, mit einem ersten Förderabschnitt 7 sowie einem optionalen zweiten Förderabschnitt 14 und einem optionalen dritten Förderabschnitt 15.

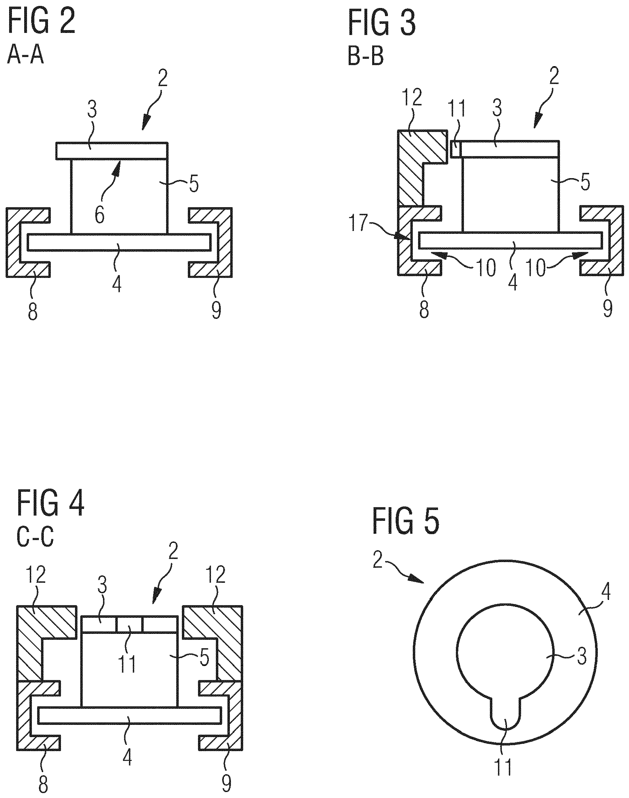

Der erste Förderabschnitt 7 ist hier um ca. 15° gegen die Senkrechte geneigt und weist zwei parallel zueinander verlaufende, gleichartige Führungsschienen 8, 9 mit je einer Führungsnut 10 auf, wobei die Führungsnuten 10 einander zugewandt sind. Die erste Führungsschiene 8 ist unter der zweiten Führungsschiene 9 angeordnet. Die Führungsnut 10 der ersten Führungsschiene 8 weist eine Reibfläche 17 auf (siehe Fig. 3) sodass eine Umfangsfläche eines Flansches 4 eines Ausgießelementes 2 (siehe Fig. 5) darauf rollend förderbar ist. Die Reibfläche 17 kann aus weichem Gummi oder aus quer zur Förderrichtung 13 geriffeltem Metall oder Kunststoff gefertigt sein. Die Führungsnut 10 der zweiten Führungsschiene 9 kann, muss aber keine solche Reibfläche aufweisen. Es ist sogar vorteilhaft, wenn die Führungsnut 10 der zweiten Führungsschiene 9 möglichst glatt, insbesondere poliert ausgeführt ist, um keine zusätzliche Reibung zu erzeugen, wenn das Ausgießelement 2 gleiten soll. Es ist in dieser Hinsicht auch vorteilhaft, wenn eine Seitenführung 12 möglichst glatt, insbesondere poliert ausgeführt ist.

An der ersten Führungsschiene 8 ist die Seitenführung 12 angebracht, welche - normal zur Ebene der beiden Führungsschienen 8, 9 gesehen - einen Abstand zur Führungsnut 10 der ersten Führungsschiene 8 aufweist (siehe Fig. 3) und - parallel zur Ebene der beiden Führungsschienen 8, 9 gemessen - einen geringeren Abstand zur zweiten Führungsschiene 9 aufweist als die Führungsnut 10 der ersten Führungsschiene 8, um ein Anschlagen des radialen Vorsprungs 11 eines Verschlusses 3 eines Ausgießelements 2 (siehe Fig. 5), das in der Führungsnut 10 der ersten Führungsschiene 8 abrollt, an der Seitenführung 12 zu erzwingen und damit möglichst auch den Kontakt mit der Reibfläche 17 der Führungsnut 10 aufzuheben.

Die Ausgießelemente 2 durchlaufen die Förderabschnitte 15, 7, 14 nacheinander allein aufgrund der Schwerkraft. Die Führungsschienen 8, 9 setzen sich jeweils durch alle drei Förderabschnitte 7, 14, 15 fort. Die beiden Führungsschienen 8, 9 können miteinander verbunden sein, sodass sich ein Boden zwischen ihnen ausbildet, der die Förderabschnitte 7, 14, 15 auf Seite der Flansche 4 der Ausgießelemente 2 abschließt.

Das Ausgießelement 2 (siehe Fig. 5) weist einen kreisringförmigen Flansch 4 auf, der einen kreiszylindrischen Ausgießer 5 umgibt. Dessen Gießöffnung 6 (siehe Fig. 2) ist lösbar, bevorzugt wiederverschließbar, mit einem Verschluss 3 verschlossen, der einen radialen Vorsprung 11 aufweist. Der Vorsprung 11 ragt radial über den Ausgießer 5 hinaus, jedoch nicht über den Flansch 4. Der Verschluss 3 ragt insgesamt ebenfalls nicht radial über den Flansch 4 hinaus. Der Verschluss 3 ist bei Ausführung des erfindungsgemäßen Verfahrens fest mit dem restlichen Ausgießelement 2 verbunden.

Das Ausgießelement 2 rollt im ersten Förderabschnitt 7 auf seinem Flansch 4 auf der Reibfläche 17 der ersten Führungsschiene 8 nach unten, wobei die Reibfläche 17 ein Gleiten verhindert. Dadurch dreht sich der Verschluss 3 so lange bis der Vorsprung 11 nach unten schaut. Dann kann sich der Verschluss 3 und damit das gesamte Ausgießelement 2 nicht mehr weiter drehen, da auf Höhe des Vorsprungs 11 eine Seitenführung 12 vorhanden ist, gegen die der Vorsprung 11 dann stößt, was einerseits ein Weiterdrehen verhindert, andererseits aber auch dafür sorgt, dass das gesamte Ausgießelement 2 samt Flansch 4 möglichst von der ersten Führungsschiene 8 gegen die ihn zuvor die Schwerkraft gedrückt hat, weg gedrückt wird, der Flansch 4 somit nicht mehr auf der ersten Führungsschiene 8, genauer auf deren Reibfläche 17, aufliegt, dort keine Reibung mehr wirkt, und somit keine weitere Drehkraft mehr aufgebracht wird, bis auf eine viel geringere Reibung an anderen Stellen der ersten und zweiten Führungsschiene 8, 9.

Im optionalen zweiten Förderabschnitt 14, der senkrecht verläuft, werden die schon richtig orientierten Ausgießelemente 2, hier mit Vorsprung 11 nach unten, übernommen und weiter gefördert, wobei zu beiden Seiten, also für beide Führungsschienen 8, 9, eine Seitenführung 12 vorgesehen ist, um die Orientierung des Vorsprungs 11 hier auf einen Winkelbereich von weniger als 20°, insbesondere von weniger als 15° zu begrenzen (siehe Fig. 4). Der gegenseitige Abstand der Seitenführungen 12 kann also, auf der Höhe des Verschlusses 3, im Bereich des Durchmessers des Verschlusses 3 ohne Vorsprung 11 liegen. Der Verschluss 3 bzw. das Ausgießelement 2 könnte sich also nur so weit drehen, bis der Vorsprung 11 an einer Seitenführung 12 anschlägt. Damit bleibt die gewünschte Ausrichtung des Vorsprungs 11 im Wesentlichen erhalten und es kann eine Übergabe an die Verschließmaschine stattfinden.

Der optionale dritte Förderabschnitt 15, der senkrecht verläuft, ist mit einem kontinuierlich angetriebenen Drehelement 16 mit einer kreiszylindrischen Führungsfläche versehen. Das Drehelement ist auf der Seite der ersten Führungsschiene 8 angeordnet und dreht sich gegen den Uhrzeigersinn. Die Ausgießelemente gleiten, nur geführt durch die beiden Führungsschienen 8, 9, nach unten. Falls der Vorsprung 11 sich links befindet, schlägt dieser am Drehelement 16 an und das Ausgießelement 2 wird in Drehung versetzt, und zwar in jene Drehrichtung - im Uhrzeigersinn - die auch im ersten Förderabschnitt 7 benötigt wird.

Die Führungsnuten 10 der beiden Führungsschienen 8, 9 sind vorzugsweise mehr als doppelt so hoch wie die Höhe des Flansches 4. So können zwei aufeinanderfolgende Ausgießelemente 2 mit ihren Flanschen 4 auch übereinander gleiten ohne in der Führungsnut 10 stecken zu bleiben.

Der erste Förderabschnitt 7 muss zumindest so lang sein wie der äußere Umfang der Flansche 4. Vorzugsweise beträgt er ein Mehrfaches (z.B. das Zweifache oder Dreifache) des äußeren Umfangs der Flansche 4, damit die gewünschte Orientierung des Vorsprungs 11 auch erreicht werden kann, falls die anfängliche Drehung des Ausgießelements 2 gestört wird, etwa durch einen Zusammenstoß zweier aufeinanderfolgender Ausgießelemente 2.

Typische Durchmesser des Flansches 4 liegen im Bereich von einigen Zentimetern, z.B. 1,5 oder 3 oder 5 cm. Typische Längen des ersten Förderabschnitts 7 liegen daher zwischen 10 bis 50 cm. Typische Höhen eines Ausgießelements 2 liegen im Bereich von einigen Millimetern bis 2 cm.

### BEZUGSZEICHENLISTE

- 1: Fördervorrichtung
- 2: Ausgießelement
- 3: Verschluss
- 4: Flansch
- 5: Ausgießer
- 6: Gießöffnung
- 7: erster Förderabschnitt
- 8: erste Führungsschiene
- 9: zweite Führungsschiene
- 10: Führungsnut
- 11: radialen Vorsprung
- 12: Seitenführung
- 13: Förderrichtung
- 14: zweiter Förderabschnitt
- 15: dritter Förderabschnitt
- 16: Drehelement
- 17: Reibfläche

## Patentansprüche

1. Verfahren zum Fördern und Orientieren von Ausgießelementen (2) mit Verschluss (3), wobei die Ausgießelemente (2) jeweils einen kreisringförmigen Flansch (4) umfassen, der an einen die Gießöffnung (6) bildenden kreiszylindrischen Ausgießer (5) anschließt und einen größeren Durchmesser aufweist als der Verschluss (3), der die Gießöffnung (6) öffenbar verschließt, und wobei der Verschluss (3) in einem Teilbereich seines Umfangs zumindest einen radialen Vorsprung (11) aufweist, der den Flansch (4) in radialer Richtung nicht überragt, **dadurch gekennzeichnet, dass** in einem ersten Förderabschnitt (7), der einen Winkel zur Senkrechten aufweist, die Ausgießelemente (2) mit der Umfangsfläche des Flansches (4) auf einer Reibfläche (17) rollend gefördert werden, solange bis der Vorsprung (11) des Verschlusses (3) an einer Seitenführung (12) anschlägt, wodurch eine räumliche Orientierung des Vorsprungs (11) des jeweiligen Ausgießelements (2) jeweils nach unten festgelegt wird, und wobei das jeweilige Ausgießelement (2) vorzugsweise durch die Seitenführung (12) von der Reibfläche (17) abgehoben wird und auf der Seitenführung (12) gleitend bei gleichbleibender räumlicher Orientierung des Vorsprungs (11) des Verschlusses (3) weiter gefördert wird.

2. Verfahren nach Anspruch 1, **dadurch gekennzeichnet, dass** der erste Förderabschnitt (7) einen Winkel zwischen 10° und 30°, vorzugsweise zwischen 12° und 18°, besonders bevorzugt von 15°, mit der Senkrechten einschließt.

3. Verfahren nach Anspruch 1 oder 2, **dadurch gekennzeichnet, dass** die Ausgießelemente (2), in Förderrichtung (13) gesehen, nach dem ersten Förderabschnitt (7) einen zweiten Förderabschnitt (14) gleitend durchlaufen, wo zu beiden Seiten eine Seitenführung (12) die Orientierung des Vorsprungs (11) auf einen Winkelbereich zwischen 5° und 30° begrenzt.

4. Verfahren nach einem der vorhergehenden Ansprüche, **dadurch gekennzeichnet, dass** die Ausgießelemente (2), in Förderrichtung (13) gesehen, vor dem ersten Förderabschnitt (7) einen dritten Förderabschnitt (15) gleitend durchlaufen, wo ein kontinuierlich angetriebenes Drehelement (16) mit einer gekrümmten Führungsfläche das Ausgießelement (2) durch Anschlag des Vorsprungs (11) an der Führungsfläche, die sich gegen die Förderrichtung (13) bewegt, in Drehung versetzt.

5. Fördervorrichtung (1) für Ausgießelemente (2) mit Verschluss (3), geeignet zur Durchführung eines Verfahrens nach einem der Ansprüche 1 bis 4, **dadurch gekennzeichnet,**
- **dass** diese zumindest einen ersten Förderabschnitt (7) aufweist, der in einem Montagezustand der Fördervorrichtung (1) in einem Winkel zur Senkrechten angeordnet ist und zwei einander gegenüberliegende Führungsschienen (8, 9) mit jeweils einer Führungsnut (10) aufweist,
- **dass** die Führungsnut (10) der ersten Führungsschiene (8), welche im Montagezustand der Fördervorrichtung (1) unter der zweiten Führungsschiene (9) angeordnet ist, eine Reibfläche (17) aufweist, sodass im Betrieb der Fördervorrichtung (1) eine Umfangsfläche eines Flansches (4) eines Ausgießelementes (2) darauf rollend förderbar ist,
- **dass** an der ersten Führungsschiene (8) zumindest eine Seitenführung (12) angebracht ist, welche - normal zur Ebene der beiden Führungsschienen (8, 9) gesehen - einen Abstand zur Führungsnut (10) der ersten Führungsschiene (8) aufweist und - parallel zur Ebene der beiden Führungsschienen (8, 9) gemessen - einen geringeren Abstand zur zweiten Führungsschiene (9) aufweist als die Führungsnut (10) der ersten Führungsschiene (8), um im Betrieb der Fördervorrichtung (1) ein Anschlagen des radialen Vorsprungs (11) eines Verschlusses (3) eines Ausgießelements (2), das in der Führungsnut (10) der ersten Führungsschiene (8) abrollt, an der Seitenführung (12) mit einer räumlichen Orientierung des Vorsprungs (11) des jeweiligen Ausgießelements (2) jeweils nach unten zu erzwingen, und damit vorzugsweise den Kontakt mit der Reibfläche (17) der Führungsnut (10) aufzuheben.

6. Fördervorrichtung (1) nach Anspruch 5, **dadurch gekennzeichnet, dass** der erste Förderabschnitt (7) im Montagezustand der Fördervorrichtung (1) einen Winkel zwischen 10° und 30°, vorzugsweise zwischen 12° und 18°, besonders bevorzugt von 15°, mit der Senkrechten einschließt.

7. Fördervorrichtung (1) nach Anspruch 5 oder 6, **dadurch gekennzeichnet, dass** in Förderrichtung (13) gesehen nach dem erstem Förderabschnitt (7) ein zweiter Förderabschnitt (14) vorgesehen ist, wo zu beiden Seiten eine Seitenführung (12) vorgesehen ist, um die Orientierung des Vorsprungs (11) auf einen Winkelbereich zwischen 5° und 30° zu begrenzen.

8. Fördervorrichtung (1) nach einem der Ansprüche 5 bis 7, **dadurch gekennzeichnet, dass** in Förderrichtung (13) gesehen vor dem erstem Förderabschnitt (7) ein dritter Förderabschnitt (15) mit einem kontinuierlich antreibbaren Drehelement (16) mit einer gekrümmten Führungsfläche vorgesehen ist, um ein im dritten Förderabschnitt (15) entlanggleitendes Ausgießelement (2) durch Anschlag des Vorsprungs (11) an der Führungsfläche, die gegen die Förderrichtung (13) bewegbar ist, in Drehung zu versetzen.

9. Verwendung einer Fördervorrichtung (1) nach einem der Ansprüche 5 bis 8 zur Förderung und Orientierung von Ausgießelementen (2) mit Verschluss (3), wobei die Ausgießelemente (2) jeweils einen kreisringförmigen Flansch (4) umfassen, der an einen die Gießöffnung (6) bildenden kreiszylindrischen Ausgießer (5) anschließt und einen größeren Durchmesser aufweist als der Verschluss (3), der die Gießöffnung (6) öffenbar verschließt, und wobei der Verschluss (3) in einem Teilbereich seines Umfangs zumindest einen radialen Vorsprung (11) aufweist, der den Flansch (4) in radialer Richtung nicht überragt.

10. System aus einer Fördervorrichtung (1) nach einem der Ansprüche 5 bis 8 und zumindest einem Ausgießelement (2) mit Verschluss (3), wobei das Ausgießelement (2) einen kreisringförmigen Flansch (4) umfasst, der an einen die Gießöffnung (6) bildenden kreiszylindrischen Ausgießer (5) anschließt und einen größeren Durchmesser aufweist als der Verschluss (3), der die Gießöffnung (6) öffenbar verschließt, und wobei der Verschluss (3) in einem Teilbereich seines Umfangs zumindest einen radialen Vorsprung (11) aufweist, der den Flansch (4) in radialer Richtung nicht überragt, **dadurch gekennzeichnet,**
- **dass** im ersten Förderabschnitt (7) der Abstand zwischen der Führungsnut (10) der ersten Führungsschiene (8) und der Führungsnut (10) der zweiten Führungsschiene (9) so bemessen ist, dass der Flansch (4) normal zur Förderrichtung (13) geführt ist, und
- **dass** im ersten Förderabschnitt (7) die Seitenführung (12) der ersten Führungsschiene (8) - normal zur Ebene der beiden Führungsschienen (8, 9) gesehen - auf Höhe des Verschlusses (3) vorgesehen ist und - parallel zur Ebene der beiden Führungsschienen (8, 9) gemessen - einen Abstand zur zweiten Führungsschiene (9) aufweist, sodass ein Anschlagen des radialen Vorsprungs (11) eines Verschlusses (3) eines Ausgießelements (2), das in der Führungsnut (10) der ersten Führungsschiene (8) abrollt, an der Seitenführung (12) mit einer räumlichen Orientierung des Vorsprungs (11) des jeweiligen Ausgießelements (2) jeweils nach unten erzwungen wird, und damit vorzugsweise der Kontakt mit der Reibfläche (17) der Führungsnut (10) aufgehoben wird.
